# EUROPÄISCHE PATENTSCHRIFT

(11) **EP 1 412 638 B1**
(45) Veröffentlichungstag und Bekanntmachung des Hinweises auf die Patenterteilung: **19.12.2007**
(21) Anmeldenummer: 02762304.0
(22) Anmeldetag: 26.06.2002
(51) Int. Cl.: F03D 1/06

(54) **VERFAHREN UND VORRICHTUNG ZUR IN SITU KONSTRUKTION EINER WINDENERGIEANLAGE**
METHOD AND DEVICE FOR IN SITU CONSTRUCTION OF A WIND POWER PLANT
PROCÉDÉ ET DISPOSITIF POUR CONSTRUIRE IN SITU UNE INSTALLATION D'ÉNERGIE ÉOLIENNE

(30) Priorität: 20.07.2001 DE 10135547; 28.08.2001 DE 10141928
(43) Veröffentlichungstag der Anmeldung: 28.04.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/007044
(87) Internationale Veröffentlichungsnummer: WO 2003/012291

(56) Entgegenhaltungen:
- WO-A-98/32968
- DE-A- 3 821 034
- US-A- 1 802 094
- US-A- 2 742 095
- US-A- 4 083 651
- US-A- 5 219 454
- US-B1- 6 726 451
- "Multi-Mega-Watt: N80 / 2,5 MW Nordex" WINDKRAFTANLAGEN, Januar 2000 (2000-01), Seiten 12-15, XP009085283 Brekendorf (DE)

## Beschreibung

Die vorliegende Erfindung betrifft ein Verfahren zum Anbringen von Rotorblättern an einer Rotornabe einer Windenergieanlage in situ.

Windenergieanlagen sind aus US1802094, WO 98/32968, sowie US 5219454 bekannt.

Ein solches Verfahren ist bereits bekannt und vermeidet Probleme, die bei einer Montage von Rotorblättern an einer Rotornabe am Boden und bei der nachfolgenden Handhabung beim Anbringen des Rotors an der Windenergieanlage entstehen. Eine solche Montage ist z. B. dargestellt im Windkraft-Journal, Ausgabe 1/2000, Seite 13.

In der dort gezeigten Abbildung ist erkennbar, dass zunächst die Gondel mit der Rotornabe an der Turmspitze angebracht wird. Sodann wird ein Rotorblatt von einem Kran angehoben und in situ an der Rotornabe befestigt.

Bei diesem bekannten Verfahren ist es jedoch nachteilig, dass bereits nach der Montage des ersten Rotorblattes eine beträchtliche Unwucht durch die einseitige Last des Blattes vorhanden ist, die beim Weiterdrehen der Rotornabe in die Montageposition für das nächste Blatt ein beträchtliches zu überwindendes Drehmoment in dem gesamten mechanischen Strang bewirkt und dessen Komponenten in hohem Maß beansprucht.

Diese Belastung steigert sich nach der Montage des zweiten Blattes, z. B. bei einem Dreiblattrotor, noch weiter. Die dabei auftretenden Momente können zu Beschädigungen bzw. zur Verkürzung der Lebensdauer der Komponenten insbesondere in dem mechanischen Triebstrang führen.

Aufgabe der Erfindung ist es daher, hohe Drehmomente bei der Montage der Rotorblätter in situ zu vermeiden.

Die Aufgabe wird erfindungsgemäß mit einem Verfahren nach den Merkmalen nach Anspruch 1 gelöst. Vorteilhafte Weiterbildungen sind in den Unteransprüchen beschrieben. Weiterhin wird die Aufgabe durch ein gemäß Anspruch 4 ausgebildetes Gewicht gelöst. Auch wird die Aufgabe durch eine Windenergieanlage mit den Merkmalen nach Anspruch 20 gelöst.

Durch das erfindungsgemäße Verfahren bzw. durch die erfindungsgemäß vorgesehenen Merkmale wird eine Unwucht im Bereich der Rotornabe auch während des Aufbaus der Windenergieanlage von vorn herein vermieden bzw. verringert. Dadurch treten während der Montage der Rotorblätter an der Rotornabe und insbesondere beim Drehen der noch nicht vollständig mit Rotorblättern besetzten Rotornabe maximal lediglich die bereits bei der Dimensionierung berücksichtigten Momente an der Rotornabe auf. Eine Beschädigung der Komponenten der Anlage - z. B. Lager, aber auch Generator (der regelmäßig für die Drehung der Rotornabe bei der Montage sorgt) - wird somit sicher vermieden.

Um eine unbeabsichtigte Drehung der Rotornabe während der Montage des Rotorblattes insbesondere nach Entfernen des Gewichtes und vor dem Anbringen des Rotorblattes zu vermeiden, wird die Rotornabe durch eine starre Verriegelung in ihrer Position gehalten. Diese starre Verriegelung nimmt auch die während dieses Austausches auftretenden Drehmomente auf. Dabei sind die verwendeten Gewichte insbesondere zur Befestigung an der Rotornabe einer Windenergieanlage ausgebildet und weisen maximal die Masse auf, die der Masse eines einzelnen Rotorblattes entspricht.

Um ein Drehmoment zu erzeugen, dass dem von einem Rotorblatt erzeugten Drehmoment entspricht, muss ein Hebelarm vorhanden sein, dessen Länge der Entfernung des Schwerpunktes des Rotorblattes von der Rotornabe entspricht, wenn das Gewicht die Masse des Rotorblattes aufweist.

Besonders bevorzugt umfasst das erfindungsgemäße Gewicht einen Massekörper und einen Hebelarm, wobei der Massekörper entlang des Hebelarms verschiebbar ist. Damit kann durch Variation der wirksamen Länge des Hebelarmes, also der Distanz zwischen Rotornabe und Massekörper, das von dem Gewicht auf die Rotomabe wirkende Drehmoment variiert werden.

In einer weiteren Ausführungsform der Erfindung ist der Massekörper bevorzugt aus einem oder mehreren Einzelkörpern gebildet. Diese Einzelkörper haben jeweils eine vorgegebene Masse und sind aneinander anreihbar. Durch diese Ausgestaltung des Massekörpers kann dessen Masse auf einfache Weise variiert werden. Weiterhin verschiebt sich durch die Aneinanderreihung der Einzelkörper jeweils der Schwerpunkt des Massekörpers und somit verändert sich die Länge des Hebelarms.

In einer bevorzugten Weiterbildung der Erfindung beträgt die Masse des Gewichts etwa die Hälfte der Masse eines Rotorblattes. Dadurch können die während der Drehung der Rotornabe auftretenden Momente immer noch ausreichend ausgeglichen werden, während das Gewicht jedoch einerseits kleiner baut und andererseits einfacher zu transportieren ist.

In einer insbesondere bevorzugten Weiterbildung der Erfindung weist jedes Gewicht wenigstens eine Tragöse auf, an der es gehandhabt und insbesondere von einem Kran gehalten werden kann. Dadurch kann das Gewicht nach dem Lösen von der Rotornabe sicher gehalten und am Boden abgesetzt werden, bevor das Rotorblatt für die Montage zur Rotornabe angehoben wird.

Im Folgenden wird eine Ausführungsform der Erfindung anhand der Zeichnungen näher erläutert. Dabei zeigen:
- Figur 1: eine Vorderansicht eines oberen Teils einer Windenergieanlage;
- Figur 2: eine vereinfachte Darstellung eines erfindungsgemäßen Gewichts;
- Figuren 3a - 3d: den Ablauf des erfindungsgemäßen Verfahrens;
- Figur 4: eine vereinfachte Innenansicht eines erfindungsgemäßen Gewichts; und
- Figur 5: eine Mehrzahl von Teilgewichten.

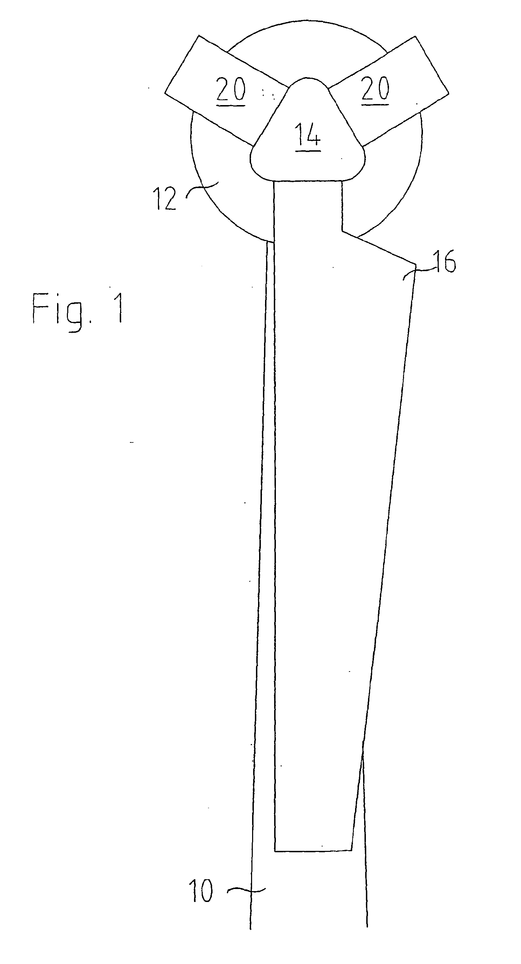

In Figur 1 ist ein oberer Abschnitt eines Turmes 10 dargestellt, an dessen Spitze eine Gondel 12 angeordnet ist, in welcher der Maschinenträger untergebracht ist, der sämtliche mechanisch bewegten Teile der Windenergieanlage aufnimmt. Im Zentrum der Gondel 12 (des Maschinenträgers) ist eine Rotornabe 14 vorgesehen, an welcher Rotorblätter 16 über Flanschverbindungen an der Nabe befestigt werden können. Eines der Rotorblätter 16 in der Montageposition ist dargestellt.

An den verbleibenden Flanschverbindungen sind Gewichte 20 vorgesehen, die an der Rotornabe 14 Lastverhältnisse herbeiführen, wie sie bei drei montierten Rotorblättern 16 entstehen. Dabei ist das resultierende Drehmoment Null. Auf diese Weise kann die Rotomabe 14 jetzt in eine gewünschte Position gedreht werden. Sodann kann eines der Gewichte 20 entfernt und durch ein Rotorblatt 16 ersetzt werden. Dadurch bleiben die Lastverhältnisse wiederum unverändert, so dass auch eine weitere Drehung und ein Austausch des verbleibenden Gewichtes 20 gegen ein Rotorblatt 16 unproblematisch ist.

Um ein ungewolltes Verdrehen der Rotornabe 14 während des Austauschvorgangs zu vermeiden, und um während des Austauschvorgangs auftretende Drehmomente aufzunehmen, kann diese Rotornabe durch eine (nicht dargestellte) Verriegelungseinrichtung in ihrer vorgesehenen Position verriegelt werden.

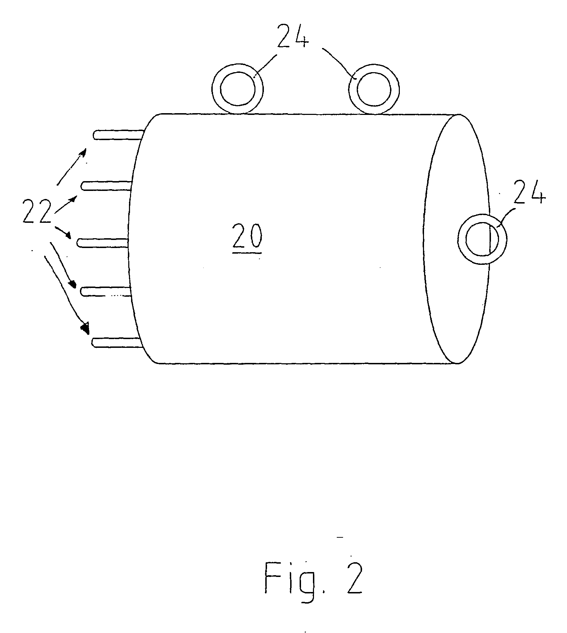

Figur 2 zeigt ein erfindungsgemäßes Gewicht 20. Dieses Gewicht 20 weist einen im Wesentlichen zylindrischen Querschnitt auf. An einer Seite des Gewichtes 20 sind Stehbolzen 22 vorgesehen, die es erlauben, eine Verbindung zwischen der Rotornabe 14 und dem Gewicht 20 herzustellen. Weiterhin sind an dem erfindungsgemäßen Gewicht 20 Ösen 24 dargestellt, die eine Handhabung des Gewichtes 20 einerseits für den Transport und andererseits auch beim Anbringen an der Rotornabe 14 sowie auch beim Entfernen von der Rotornabe 14 erlauben.

Demnach wird entsprechend dem erfindungsgemäßen Verfahren die Rotornabe 14 am Boden bereits mit drei Gewichten 20 bestückt. Die Rotomabe 14 wird dann mit einem (nicht dargestellten) Kran in die Einbausituation transportiert, so dass die Rotorblätter 16 dann im Austausch mit den Gewichten 20 in situ montiert werden können.

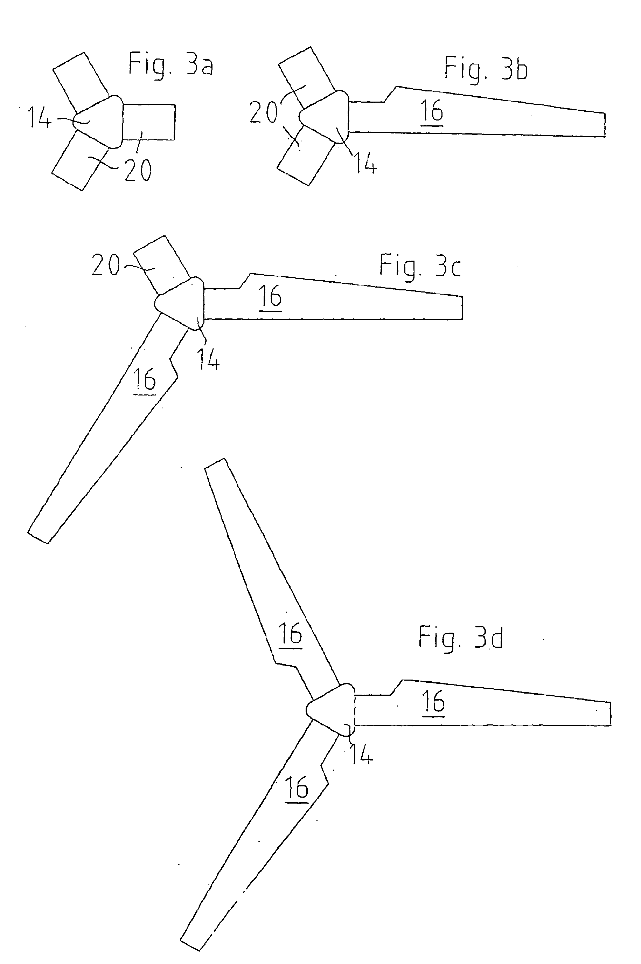

Die Figuren 3a - 3d zeigen vereinfacht den Ablauf des erfindungsgemäßen Verfahrens.

In Figur 3a ist die Rotornabe 14 mit drei Gewichten 20 dargestellt. Dabei befindet sich eines der Gewichte 20 in einer seitlichen (03:00Uhr) Position.

Entsprechend dem erfindungsgemäßen Verfahren wird nun die Rotornabe 14 in ihrer Position verriegelt, so dass ein Verdrehen aus dieser Position ausgeschlossen ist. Dann wird das Gewicht 20 in der seitlichen Position von der Rotornabe 14 gelöst und entfernt und an dessen Stelle wird ein Rotorblatt 16 an der Rotornabe 14 befestigt.

Dies ist in Figur 3b mit einem Rotorblatt 16 in der seitlichen Position anstelle des Gewichtes 20 dargestellt. Wird jetzt zur Vorbereitung der Montage des nächsten Rotorblattes 16 die Verriegelung gelöst, sind die Lastverhältnisse an der Rotornabe 14 unverändert. Die Rotornabe 14 kann somit weitergedreht werden, bis das nächste Gewicht 20 in der seitlichen (03:00 Uhr) Position steht. Sodann wird die Rotomabe 14 wiederum verriegelt und der Austausch von Gewicht 20 und Rotorblatt 16 wird wiederholt. Das Ergebnis dieses weiteren Austauschvorganges ist in Figur 3c dargestellt.

Auch jetzt sind die Lastverhältnisse unverändert, so dass dieser Vorgang noch ein zweites Mal wiederholt werden kann.

Figur 3d zeigt den Rotor mit allen an der Rotornabe 14 angebrachten Rotorblättern 16 nach Abschluss des erfindungsgemäßen Verfahrens.

Durch dieses erfindungsgemäße Verfahren treten an der Rotornabe 14 stets nur die Momente auf, für die sie und der gesamte nachfolgende Triebstrang ausgelegt sind. Sind alle drei Momente gleich groß, ist das resultierende Moment stets gleich Null.

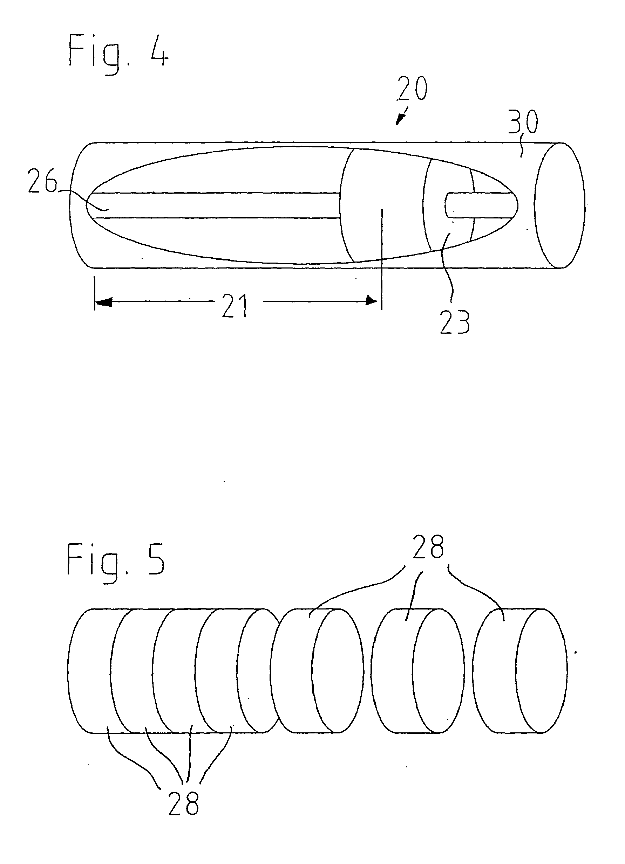

Figur 4 zeigt eine vereinfachte Innenansicht eines erfindungsgemäßen Gewichtes 20. Dazu weist dieses Gewicht 20 einen elliptischen Schnitt auf. Innerhalb dieses Gewichtes 20 befindet sich ein Hebelarm 26, auf dem ein Massekörper 23 verschiebbar angeordnet ist. Das Gewicht 20 sei derart ausgebildet, dass Befestigungsvorrichtungen an der linken Seite des Gewichtes 20 vorgesehen (jedoch in dieser Figur nicht dargestellt) sind.

Erfindungsgemäß lässt sich der Massekörper 23 entlang des Hebelarms 26 verschieben, so dass die von dem linken Ende des Gewichtes 20 ermittelte Entfernung des Schwerpunktes des Massekörpers 23, die in dieser Figur mit 21 bezeichnet ist, veränderlich ist. Diese mit 21 bezeichnete Distanz ist der wirksame Hebelarm, über welchen der Massekörper 23 auf die (nicht dargestellte) Rotornabe einwirkt und ein Moment erzeugt.

Bei unveränderter Masse des Massekörpers 23 kann also das von dem Gewicht 20 erzeugte Moment variiert werden.

Dem Fachmann sind natürlich Vorrichtungen zum Festlegen des Massekörpers 23 in einer gewünschten Position, z. B. in Form von Stoppern oder andern geeigneten Halteelementen bekannt und in dieser Figur nicht ausdrücklich dargestellt. Da aber erfindungsgemäß dieses Gewicht 20 mit der Rotornabe 14 gedreht wird, muss eine Verschiebung des Massekörpers 23 entlang des Hebelarms 26 zuverlässig verhindert werden.

Figur 5 zeigt eine Variante des Massekörpers. In dieser Figur sind mehrere Einzelgewichte 28 dargestellt, die durch Aneinanderreihen zu einem Massekörper vereinigt werden können. Durch dieses Aneinanderreihen der Einzelgewichte 28 kann die gewünschte Masse des Massekörpers 23 in vorgegebenen Stufen angepaßt werden und ergibt somit eine weitere Möglichkeit, dass von dem Gewicht 20 ausgeübte Drehmoment zu variieren.

## Patentansprüche

1. Verfahren zur in situ Montage einer Windenergieanlage, bestehend aus einem Turm, auf dem ein Maschinenträger lastet, welcher eine Aufnahme für einen Rotor aufweist, wobei der Rotor eine Nabe enthält, die wenigstens einen Flansch zur Aufnahme von wenigstens einem Rotorblatt aufweist, **gekennzeichnet durch** folgende Schritte:
lösbare Montage eines Gewichtes (20) an wenigstens einem Flansch der Rotornabe (14);
Anbringen der Rotornabe (14) am Maschinenträger;
Positionieren der Rotornabe (14) in einer vorgegebenen Position;
Austausch des am Flansch der Rotornabe angeordneten Gewichtes (20) mit einem Rotorblatt (16) **durch** Demontage des Gewichtes (20) und anschließender Montage des Rotorblattes (16) an der Rotornabe (14).

2. Verfahren nach Anspruch 1,
**dadurch gekennzeichnet, dass** an sämtlichen zur Befestigung von Rotorblättern vorgesehenen Flanschen der Rotornabe (14) Gewichte (20) angeordnet werden.

3. Verfahren nach einem der vorstehenden Ansprüche,
**dadurch gekennzeichnet, dass** die Rotornabe (14) wenigstens während der Montage eines Rotorblattes (16) durch eine Verriegelung in ihrer Position gehalten wird.

4. Ausgleichsgewicht, **gekennzeichnet durch** einen Massekörper (23) und einen Hebelarm (26), wobei das Ausgleichsgewicht zur vorübergehenden Befestigung an einer Rotornabe (14) einer Windenergieanlage vorgesehen und gegen ein Rotorblatt (16) der Windenergieanlage austauschbar ist.

5. Ausgleichsgewicht nach Anspruch 4,
**dadurch gekennzeichnet, dass** der Massekörper (23) und der Hebelarm (26) so bemessen sind, dass das Ausgleichsgewicht auf die Nabe (14) ein vorgegebenes Moment aufbringt, welches insbesondere in etwa dem Moment entspricht, dass ein Rotorblatt (16) auf die Nabe aufbringt.

6. Ausgleichsgewicht nach einem der Ansprüche 4 oder 5,
**dadurch gekennzeichnet, dass** die wirksame Länge des Hebelarms (26) der Entfernung des Schwerpunktes des Rotorblattes (16) von der Nabe (14) entspricht und / oder die Masse des Massekörpers (23) der Masse des Rotorblattes (16) entspricht.

7. Ausgleichsgewicht nach Anspruch 4,
**dadurch gekennzeichnet, dass** der Massekörper (23) und der Hebelarm (26) so bemessen sind, dass das Ausgleichsgewicht auf die Nabe (14) ein vorgegebenes Moment aufbringt, welches insbesondere der Hälfte des Momentes entspricht, dass ein Rotorblatt (16) auf die Nabe (14) aufbringt.

8. Ausgleichsgewicht nach einem der Ansprüche 4 bis 7,
**dadurch gekennzeichnet, dass** der Massekörper (23) aus einem oder mehreren Einzelkörpern (28) gebildet ist.

9. Ausgleichsgewicht nach Anspruch 8,
**dadurch gekennzeichnet, dass** der Hebelarm (26) geeignete Vorrichtungen zur Befestigung an einem Flansch der Rotomabe (14) aufweist.

10. Ausgleichsgewicht nach Anspruch 8,
**dadurch gekennzeichnet, dass** wenigstens einer der Einzelkörper (28) geeignete Vorrichtungen zur Befestigung an einem Flansch der Rotomabe (14) aufweist, und dass Verbindungsmittel zum Verbinden der Einzelkörper (28) untereinander vorgesehen sind.

11. Ausgleichsgewicht nach einem der Ansprüche 4 bis 9,
**dadurch gekennzeichnet, dass** der Massekörper (23) entlang des Hebelarms (26) verschiebbar ist.

12. Ausgleichsgewicht nach Anspruch 11,
**dadurch gekennzeichnet, dass** zwischen dem Massekörper (23) und dem Hebelarm (26) ein Spindelantrieb ausgebildet ist.

13. Ausgleichsgewicht nach Anspruch 12,
**dadurch gekennzeichnet, dass** der als Antriebsspindel wirkende Hebelarm (26) drehbar gelagert ist und motorisch und / oder manuell drehbar ist, um den Massekörper (23) entlang des Hebelarms (26) zu verfahren.

14. Ausgleichsgewicht nach einem der Ansprüche 4 bis 13,
**dadurch gekennzeichnet, dass** das Ausgleichsgewicht wenigstens eine Tragöse (24) zum Transport des Ausgleichsgewichtes aufweist.

15. Ausgleichsgewicht nach einem der Ansprüche 4 bis 14,
**dadurch gekennzeichnet, dass** ein Mantel (30) den Massekörper (23) und den Hebelarm (26) umschließt.

16. Ausgleichsgewicht nach Anspruch 15,
**gekennzeichnet durch** wenigstens einen Durchbruch des Mantels (30) als Sichtöffnung zum Bestimmen der Position des Massekörpers (23).

17. Ausgleichsgewicht nach Anspruch 16,
**gekennzeichnet durch** eine Reihe von Bohrungen als Sichtöffnungen, die in Längsrichtung des Ausgleichsgewichtes voneinander beabstandet sind.

18. Ausgleichsgewicht nach Anspruch 16,
**dadurch gekennzeichnet, dass** die Sichtöffnung als Langloch ausgebildet ist, welches sich in Längsrichtung des Ausgleichsgewichtes erstreckt.

19. Verwendung eines Gewichts (20) als Ausgleichsgewicht zur lösbaren Befestigung an einer Rotornabe (14) vor Montage eines Rotorblattes einer Windenergieanlage an der Rotornabe.

20. Windenergieanlage,
bestehend aus einem Turm, einem auf dem Turm gelagerten Maschinenträger und einer an dem Maschinenträger angebrachten Nabe (14) für einen Rotor, wobei die Nabe (14) wenigstens einen Flansch zur Aufnahme eines Rotorblattes (16) aufweist und an dem Flansch ein Gewicht (20), vorzugsweise ein Gewicht nach einem der Ansprüche 4 und 18, lösbar angebracht ist, welches gegen ein Rotorblatt (16) austauschbar ist.

## Claims

1. Method for the in situ assembly of a wind power installation consisting of a tower on which is supported a machine carrier which has a receiving means for a rotor, wherein the rotor includes a hub which has at least one flange for receiving at least one rotor blade,
**characterised by** the following steps:
detachably mounting a weight (20) on at least one flange of the rotor hub (14);
installing the rotor hub (14) on the machine carrier;
positioning the rotor hub (14) in a predetermined position;
exchanging the weight (20) arranged on the flange of the rotor hub for a rotor blade (16) by removing the weight (20) and then mounting the rotor blade (16) on the rotor hub (14).

2. Method according to claim 1,
**characterised in that** weights (20) are arranged on all flanges of the rotor hub (14) that are provided for the fastening of rotor blades.

3. Method according to one of the preceding claims,
**characterised in that** the rotor hub (14) is held in its position by a locking means at least during the mounting of a rotor blade (16).

4. Balancing weight, **characterised by** a mass body (23) and a lever arm (26), wherein the balancing weight is provided for temporary fastening to a rotor hub (14) of a wind power installation and is exchangeable for a rotor blade (16) of the wind power installation.

5. Balancing weight according to claim 4,
**characterised in that** the mass body (23) and the lever arm (26) are so dimensioned that the balancing weight applies to the hub (14) a predetermined moment that especially corresponds approximately to the moment that a rotor blade (16) applies to the hub.

6. Balancing weight according to one of claims 4 and 5,
**characterised in that** the effective length of the lever arm (26) corresponds to the distance of the centre of gravity of the rotor blade (16) from the hub (14) and/or the mass of the mass body (23) corresponds to the mass of the rotor blade (16).

7. Balancing weight according to claim 4,
**characterised in that** the mass body (23) and the lever arm (26) are so dimensioned that the balancing weight applies to the hub (14) a predetermined moment that especially corresponds to half of the moment that a rotor blade (16) applies to the hub (14).

8. Balancing weight according to any one of claims 4 to 7,
**characterised in that** the mass body (23) is formed from one or more individual bodies (28).

9. Balancing weight according to claim 8,
**characterised in that** the lever arm (26) has suitable devices for fastening to a flange of the rotor hub (14).

10. Balancing weight according to claim 8,
**characterised in that** at least one of the individual bodies (28) has suitable devices for fastening to a flange of the rotor hub (14), and connecting means for connecting the individual bodies (28) to one another are provided.

11. Balancing weight according to any one of claims 4 to 9,
**characterised in that** the mass body (23) is displaceable along the lever arm (26).

12. Balancing weight according to claim 11,
**characterised in that** a spindle drive is constructed between the mass body (23) and the lever arm (26).

13. Balancing weight according to claim 12,
**characterised in that** the lever arm (26) acting as the drive spindle is supported rotatably and is rotatable by motor means and/or manually in order to displace the mass body (23) along the lever arm (26).

14. Balancing weight according to any one of claims 4 to 13,
**characterised in that** the balancing weight has at least one lifting eye (24) for transport of the balancing weight.

15. Balancing weight according to any one of claims 4 to 14,
**characterised in that** a casing (30) encloses the mass body (23) and the lever arm (26).

16. Balancing weight according to claim 15,
**characterised by** at least one opening in the casing (30) as a viewing aperture for determining the position of the mass body (23).

17. Balancing weight according to claim 16,
**characterised by** a row of bores as viewing apertures, which are spaced from one another in the longitudinal direction of the balancing weight.

18. Balancing weight according to claim 16,
**characterised in that** the viewing aperture is in the form of a slot extending in the longitudinal direction of the balancing weight.

19. Use of a weight (20) as a balancing weight for detachable fastening to a rotor hub (14) prior to mounting of a rotor blade of a wind power installation on the rotor hub.

20. Wind power installation,
consisting of a tower, a machine carrier supported on the tower, and a hub (14), installed on the machine carrier, for a rotor, wherein the hub (14) has at least one flange for receiving a rotor blade (16) and there is detachably mounted on the flange a weight (20), preferably a weight according to any one of claims 4 to 18, which is exchangeable for a rotor blade (16).

## Revendications

1. Procédé de montage in situ d'une installation d'énergie éolienne, se composant d'une tour, sur laquelle pèse un bâti de machine qui présente un logement pour un rotor, le rotor comprenant un moyeu qui présente au moins une bride pour recevoir au moins une pale de rotor, **caractérisé par** les étapes suivantes :
montage réversible d'un poids (20) sur au moins une bride du moyeu de rotor (14) ;
montage du moyeu de rotor (14) sur le bâti de machine ;
positionnement du moyeu de rotor (14) à une position prescrite ;
échange du poids (20) disposé sur la bride du moyeu de rotor contre une pale de rotor (16) en démontant le poids (20) et en montant ensuite la pale de rotor (16) sur le moyeu de rotor (14).

2. Procédé selon la revendication 1,
**caractérisé en ce que** sur l'ensemble des brides du moyeu de rotor (14) prévues pour fixer les pales de rotor sont disposés des poids (20).

3. Procédé selon l'une quelconque des revendications précédentes,
**caractérisé en ce que** le moyeu du rotor (14) est maintenu dans sa position au moins pendant le montage d'une pale de rotor (16) par le biais d'un dispositif de verrouillage.

4. Contrepoids, **caractérisé par** un corps de masse (23) et un bras de levier (26), le contrepoids étant prévu pour la fixation temporaire sur un moyeu de rotor (14) d'une installation d'énergie éolienne et pouvant être échangé contre une pale de rotor (16) de l'installation d'énergie éolienne.

5. Contrepoids selon la revendication 4,
**caractérisé en ce que** le corps de masse (23) et le bras de levier (26) sont dimensionnés de telle sorte que le contrepoids applique un couple prescrit sur le moyeu (14), lequel correspond en particulier à peu près au couple qu'une pale de rotor (16) applique sur le moyeu.

6. Contrepoids selon l'une quelconque des revendications 4 ou 5,
**caractérisé en ce que** la longueur utile du bras de levier (26) correspond à la distance entre le centre de gravité de la pale de rotor (16) et le moyeu (14) et/ou la masse du corps de masse (23) correspond à la masse de la pale de rotor (16).

7. Contrepoids selon la revendication 4,
**caractérisé en ce que** le corps de masse (23) et le bras de levier (26) sont dimensionnés de telle sorte que le contrepoids applique un couple prescrit sur le moyeu (14), lequel correspond en particulier à la moitié du couple qu'une pale de rotor (16) applique sur le moyeu (14).

8. Contrepoids selon l'une quelconque des revendications 4 à 7,
**caractérisé en ce que** le corps de masse (23) est conçu par un ou plusieurs corps individuels (28).

9. Contrepoids selon la revendication 8,
**caractérisé en ce que** le bras de levier (26) présente des dispositifs appropriés pour la fixation sur une bride du moyeu de rotor (14).

10. Contrepoids selon la revendication 8,
**caractérisé en ce qu'**au moins l'un des corps individuels (28) présente des dispositifs appropriés pour la fixation sur une bride du moyeu de rotor (14), et **en ce que** des moyens de liaison sont prévus pour relier les corps individuels (28) entre eux.

11. Contrepoids selon l'une quelconque des revendications 4 à 9,
**caractérisé en ce que** le corps de masse (23) peut être déplacé le long d'un bras de levier (26).

12. Contrepoids selon la revendication 11,
**caractérisé en ce qu'**entre le corps de masse (23) et le bras de levier (26) est conçu un entraînement à broche.

13. Contrepoids selon la revendication 12,
**caractérisé en ce que** le bras de levier (26) agissant comme broche d'entraînement est logé de manière rotative et peut être pivoté par un moteur et/ou manuellement afin de déplacer le corps de masse (23) le long du bras de levier (26).

14. Contrepoids selon l'une quelconque des revendications 4 à 13,
**caractérisé en ce que** le contrepoids présente au moins un oeillet de levage (24) pour transporter le contrepoids.

15. Contrepoids selon l'une quelconque des revendications 4 à 14,
**caractérisé en ce qu'**une enveloppe (30) entoure le corps de masse (23) et le bras de levier (26).

16. Contrepoids selon la revendication 15,
**caractérisé par** au moins une brèche de l'enveloppe (30) servant d'ouverture pour déterminer la position du corps de masse (23).

17. Contrepoids selon la revendication 16,
**caractérisé par** une rangée de perçages servant d'ouvertures qui sont espacés les uns des autres dans le sens longitudinal du contrepoids.

18. Contrepoids selon la revendication 16,
**caractérisé en ce que** l'ouverture est réalisée comme un trou oblong qui s'étend dans le sens longitudinal du contrepoids.

19. Utilisation d'un poids (20) comme contrepoids pour la fixation détachable sur un moyeu de rotor (14) avant le montage d'une pale de rotor d'une installation d'énergie éolienne sur le moyeu de rotor.

20. Installation d'énergie éolienne,
se composant d'une tour, d'un bâti de machine logé sur la tour et d'un moyeu (14) pour un rotor monté sur le bâti de machine, le moyeu (14) présentant au moins une bride pour la réception d'une pale de rotor (16) et sur la bride étant monté de manière détachable un poids (20), de préférence un poids selon l'une quelconque des revendications 4 à 18, lequel poids peut être échangé contre une pale de rotor (16).
